# EUROPEAN PATENT APPLICATION

(11) **EP 4 060 590 A1**
(43) Date of publication of application: **21.09.2022**
(21) Application number: 22160994.4
(22) Date of filing: 09.03.2022
(51) Int. Cl.: G06Q 20/40, G06N 3/04

(54) **METHODS AND SYSTEMS FOR DETECTING FRAUDS BY UTILIZING SPEND PATTERNS OF PAYMENT INSTRUMENTS OF USER**

(30) Priority: 16.03.2021 IN 202141011123
(71) Applicant: MasterCard International Incorporated, Purchase NY New York 10577-2509 (US)
(72) Inventor: BHATT, Deepak, 248001 Dehradun (IN); BHASIN, Harsimran, 110007 Delhi (IN)
(74) Representative: Barker Brettell LLP

(57) **Abstract**

Embodiments provide methods and systems for detecting frauds in payment transactions made by payment instrument using spend patterns of multiple payment instruments associated with user (102). The method (700) performed by server system (108; 200) includes receiving (702) payment transaction data associated with first payment instrument including information of payment transaction performed at particular merchant (106a-c). Method (700) includes generating (704) multivariate payment transaction sequence associated with one or more second payment instruments of user (102). Method (700) includes predicting (706) simulated univariate payment transaction sequence associated with the first payment instrument based on first neural network model and the multivariate payment transaction sequence. Method (700) includes providing (708) simulated univariate payment transaction sequence and real univariate payment transaction sequence of first instrument to second neural network model. Method (700) includes determining (710) that payment transaction is fraudulent based, at least in part, on comparison of simulated univariate payment transaction sequence and real payment transaction sequence by the second neural network model.

## Description

### TECHNICAL FIELD

The present disclosure relates to artificial intelligence processing systems and, more particularly to, electronic methods and complex processing systems for detecting frauds in payment transactions made by a payment instrument using spend patterns of multiple payment instruments associated with a user.

### BACKGROUND

Nowadays, cashless transactions have drastically transformed people's lives. Specifically, most of the customers utilize various payment instruments (such as, payment cards, electronic wallets, payment applications) through which cashless transactions have been made seamless. Frauds and credit card abuse patterns are emerging every day. The frauds have also become possible in various manners, for example, getting a payment card from an issuer bank with stolen identity data, utilizing a stolen or reproduced card. Fraudsters may then utilize the cards for purchase consumptions, cash-out the whole account balance, etc.

Tracking financial frauds in payment transactions is a very challenging task. Fraudsters keep utilizing very sophisticated techniques in online payment frauds, where such transactions do not appear like fraud transactions to parties involved in the transactions. In fact, fraudsters can look and behave exactly like an authentic customer might be expected to look and behave while doing a payment transaction using a payment card. Further, when the fraudsters use multiple payment cards for payment transactions, these payment transactions may individually look like fair and acceptable transactions, but when considered in combinations, turn out to be fraudulent attacks. Hence, identifying truly suspicious events that deserve further actions by limited fraud resources remains a serious challenge for financial institutions.

In existing risk control systems, fraud and credit risk detection models used in such systems are passive in nature. Once fraud patterns are captured, the fraud and credit risk models are trained to react in the future. This leads to a huge loss in revenue and impact customer experience negatively. This necessitates an intelligent approach to utilize behavior of usage of multiple cards that a single user holds to detect fraud spending patterns.

Thus, there exists a technological need for a technical solution for detecting frauds based on spending patterns of multiple payment instruments of a user.

### SUMMARY

Various embodiments of the present disclosure provide systems and methods to determine a fraud in a payment instrument of a user based on the usage of the other payment instruments of a user.

In an embodiment, a computer-implemented method is disclosed. The computer-implemented method performed by a server system includes receiving payment transaction data associated with a first payment instrument of a user. The payment transaction data may include information of a payment transaction performed at a particular merchant. The computer-implemented method includes generating multivariate payment transaction sequence associated with one or more second payment instruments of the user. The multivariate payment transaction sequence represents past payment transactions accessed from a database, and the past payment transactions are performed using the one or more second payment instruments at the particular merchant over a threshold period of time. The computer-implemented method includes predicting a simulated univariate payment transaction sequence associated with the first payment instrument based, at least in part, on a first neural network model and the multivariate payment transaction sequence. The computer-implemented method includes providing the simulated univariate payment transaction sequence and a real univariate payment transaction sequence generated based on the receipt of the payment transaction data associated with the first payment instrument of the user to a second neural network model. The computer-implemented method includes determining that the payment transaction is fraudulent based, at least in part, on a comparison of the simulated univariate payment transaction sequence and the real payment transaction sequence by the second neural network model.

### BRIEF DESCRIPTION OF THE FIGURES

For a more complete understanding of example embodiments of the present technology, reference is now made to the following descriptions taken in connection with the accompanying drawings in which:
**FIG. 1** is an example representation of an environment, related to at least some example embodiments of the present disclosure;
**FIG. 2** is a simplified block diagram of a server system, in accordance with an embodiment of the present disclosure;
**FIG. 3** is a schematic representation of a generative adversarial network (GAN) model with respective inputs and outputs, in accordance with an embodiment of the present disclosure;
**FIG. 4A** is a schematic block diagram representation of a process flow for generating multivariate payment transaction sequence associated with one or more second payment instruments, in accordance with an embodiment of the present disclosure;
**FIG. 4B** is a schematic block diagram representation for generating a real univariate payment transaction sequence associated with a first payment instrument, in accordance with an embodiment of the present disclosure;
**FIGS. 5A** **and** **5B****,** collectively, represents a flow diagram of a training process of a generative adversarial network (GAN) model, in accordance with an embodiment of the present disclosure;
**FIG. 6** illustrates a schematic representation of network architecture of the GAN model with multi-layer perceptron (MLP) architecture, in accordance with an embodiment of the present disclosure;
**FIG. 7** represents a flow diagram of a computer-implemented method for detecting fraudulent spend transactions made by a first payment instrument of a user, in accordance with an embodiment of the present disclosure;
**FIG. 8** is a simplified block diagram of an issuer server, in accordance with an embodiment of the present disclosure; and
**FIG. 9** is a simplified block diagram of a payment server, in accordance with an embodiment of the present disclosure.

The drawings referred to in this description are not to be understood as being drawn to scale except if specifically noted, and such drawings are only exemplary in nature.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

The term "issuer", used throughout the description, refers to a financial institution normally called as an "issuer bank" or "issuing bank" in which an individual or an institution may have an account. The issuer also issues a payment card, such as a credit card or a debit card, etc. Further, the issuer may also facilitate online banking services such as electronic money transfer, bill payment, etc., to the account holders through a server system called as "issuer server" throughout the description.

The term "payment instrument", used throughout the description, refers to a paper-based or electronic payment means or other payment means used to initiate the transfer of funds. Example of the payment instruments includes payment accounts, payment cards (such as, debit card, credit card, etc.), digital payment cards, e-wallets, etc.

The term "payment network", used throughout the description, refers to a network or collection of systems used for the transfer of funds through the use of cash-substitutes. Payment networks may use a variety of different protocols and procedures in order to process the transfer of money for various types of transactions. Transactions that may be performed via a payment network may include product or service purchases, credit purchases, debit transactions, fund transfers, account withdrawals, etc. Payment networks may be configured to perform transactions via cash-substitutes, which may include payment cards, letters of credit, checks, financial accounts, etc. Examples of networks or systems configured to perform as payment networks include those operated by such as Mastercard^{®}.

### OVERVIEW

Various example embodiments of the present disclosure provide methods, systems, user devices, and computer program products for facilitating fraud detection in a payment transaction using usage behaviors of multiple payment instruments of a user. The user may own a plurality of payment instruments such as a credit cards, debit cards, e-wallets, virtual payment cards, etc. which are associated with one or more issuers. The present disclosure describes methods and systems to detect a fraud in any one of such payment instruments of the user by utilizing the spending behavior of the other payment instruments of the same user.

In various example embodiments, the present disclosure describes a server system that is configured to detect fraud in a payment transaction made using one of the multiple payment instruments of the user. In one example, the server system is a payment server associated with a payment network. The server system is configured to train one or more generative adversarial network (GAN) models for predicting spending patterns of a payment instrument using spending patterns of other one or more payment instruments associated with a user. A first neural network model and a second neural network model are incorporated in the GAN model. The first neural network model is a generator neural network model and the second neural network model is a discriminator neural network model.

The server system is configured to receive payment transaction data associated with a first payment instrument of the user. The payment transaction data includes information of a payment transaction performed at a particular merchant.

In an embodiment, the server system may generate multivariate payment transaction sequence associated with the one or more second payment instruments of the user. The multivariate payment transaction sequence represents past payment transactions using the one or more second payment instruments at the particular merchant over a threshold period of time. The server system is configured to aggregate one or more payment transactional features corresponding to the past payment transactions of the one or more second payment instruments to generate the multivariate payment transaction sequence. The one or more payment transactional features may include an amount of spend, a merchant category code (MCC), merchant risk profile, a frequency of purchase at the particular merchant, and an average amount of purchase at the particular merchant, etc.

The server system is configured to predict a simulated univariate payment transaction sequence associated with the first payment instrument based, at least in part, on the first neural network model of the trained GAN model and the multivariate payment transaction sequence of the one or more second payment instruments. The server system is configured to provide the simulated univariate payment transaction sequence and a real univariate payment transaction sequence generated based on the receipt of the payment transaction data associated with the first payment instrument of the user to the second neural network model. The real univariate payment transaction sequence of the first payment instrument is generated by aggregating the payment transaction and previous spendings associated with the first payment instrument performed at the particular merchant over the threshold period of time.

Thereafter, the server system is configured to determine that the payment transaction is fraudulent based, at least in part, on a comparison of the simulated univariate payment transaction sequence and the real univariate payment transaction sequence. In particular, the discriminator neural network model is configured to identify a deviation value between the simulated univariate payment transaction sequence and the real univariate payment transaction sequence. The server system is configured to determine the payment transaction being fraudulent when the deviation value is greater than a predetermined threshold value.

In the training phase, at first, the server system is configured to access payment transaction data of a plurality of payment instruments associated with the user. The payment transaction data includes information of past payment transactions performed at a plurality of merchants using the plurality of payment instruments within a particular time duration. The server system is then configured to select a first payment instrument from the plurality of payment instruments to learn spending patterns of the first payment instrument at a specific merchant.

The server system is configured to generate multivariate payment transaction sequence of one or more second payment instruments from the plurality of payment instruments by aggregating payment transactional features of the past payment transactions associated with the one or more second payment instruments on timely basis. Then, the server system is configured to transmit the multivariate payment transaction sequence and a merchant flag vector to the generator neural network model for generating a simulated univariate payment transaction sequence associated with the first payment instrument. The merchant flag vector is utilized for conditioning input of the generator neural network model based on the specific merchant.

Further, the server system is configured to transmit the simulated univariate payment transaction sequence and a real univariate payment transaction sequence associated with the first payment instrument to the discriminator neural network model that determines a deviation value between the simulated univariate transaction sequence and the real payment transaction sequence associated the first payment instrument. Based on the deviation value, the server system is configured to updating neural network weights of the generator neural network model. The above training process is repeated until an accuracy of the GAN model is reached at or above a threshold.

Once the GAN model is trained for various combinations of the first payment instrument and one or more second payment instruments, the GAN model is deployed to be utilized in real time, to simulate spending on one of the plurality of payment instruments using spending patterns across other payment instruments of the plurality of payment instruments and determine deviations between the simulated and real spending to find fraudulent payment transactions.

Various embodiments of the present disclosure offer multiple advantages and technical effects. For instance, the present disclosure allows issuers to detect frauds in a payment transaction by utilizing the payment transaction behaviors of multiple payment instruments of a user. The present disclosure utilizes various payment transaction information associated with the multiple payment instruments of the user to detect a fraud in a payment transaction made using any one of the multiple payment instruments of the user in a very convenient manner. The present disclosure provides an improved and robust model that is trained to detect frauds for all of the multiple payment instruments of the user used at various merchants by learning interdependency of spending patterns of the multiple payment instruments in a robust manner. The capability of the single GAN model to detect frauds in all of the multiple payment instruments facilitates reduction in training time and memory consumption. The present disclosure eliminates need of querying a merchant identifier associated with a payment transaction in a merchant database by handling the merchant using its representation obtained as part of training phase which further leads to no latency.

Further, the present disclosure provides significantly more robust solutions because of handling simultaneous/concurrent processor execution (such as applying the first and second neural network simultaneously to determine a possible fraud). Further, the present disclosure also warns or sends an alert message to the issuer server to regarding a possible fraud for a payment transaction in real-time or a near real-time which reduces in the reduction of revenue loss and reputation loss for the payment organizations.

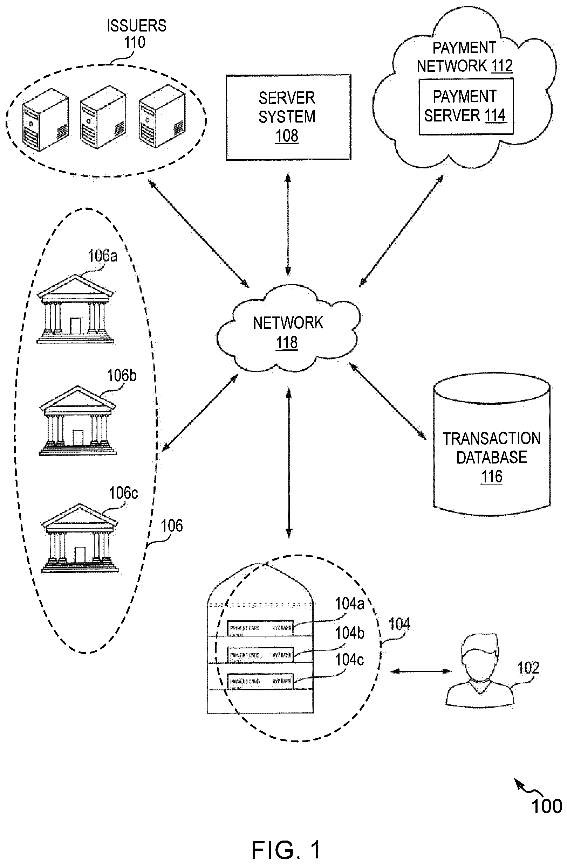

Various example embodiments of the present disclosure are described hereinafter with reference to FIGS. 1 to 9.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, detecting frauds based on multiple payment instruments (e.g., payment cards) of a user. More particularly, the present disclosure facilitates fraud detection for a payment transaction performed using a first payment instrument associated with the user possessing one or more second payment instruments. Examples of the payment instruments may include, but are not limited to, payment cards (such as, credit cards, debit cards, virtual payment cards, etc.), payment accounts, electronic wallets, etc. The environment 100 generally includes a user 102 possessing a plurality of payment instruments for example, payment cards 104a, 104b and 104c (collectively, referred to as payment cards 104 hereinafter), one or more merchants 106a, 106b and 106c (collectively, referred to as a merchant 106), a server system 108, one or more issuer servers 110, a payment network 112 including a payment server 114, and a transaction database 116 each connected to, and in communication with (and/or with access to) a network 118. The network 118 may include, without limitation, a light fidelity (Li-Fi) network, a local area network (LAN), a wide area network (WAN), a metropolitan area network (MAN), a satellite network, the Internet, a fiber-optic network, a coaxial cable network, an infrared (IR) network, a radio frequency (RF) network, a virtual network, and/or another suitable public and/or private network capable of supporting communication among the entities illustrated in FIG. 1, or any combination thereof.

Various entities in the environment 100 may connect to the network 118 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof. The network 118 may include, without limitation, a local area network (LAN), a wide area network (WAN) (e.g., the Internet), a mobile network, a virtual network, and/or another suitable public and/or private network capable of supporting communication among two or more of the entities illustrated in FIG. 1, or any combination thereof. For example, the network 118 may include multiple different networks, such as a private network made accessible by the payment network 112 to the issuer servers 110 and the transaction database 116 and separately, a public network (e.g., the Internet) through which the server system 108, the payment server 114, the issuer servers 110, and the transaction database 116 may communicate.

It is exemplarily shown in the FIG. 1 that a plurality of payment instruments is represented as the payment cards 104. However, the plurality of payment instruments may also include a combination of e-wallet applications, virtual payment cards, payment accounts, etc. In one example, the user 102 may utilize the plurality of payment instruments for different purposes like online shopping, offline shopping, service subscriptions, online payments, monthly SIPs, etc. The plurality of payment instruments possessed by the user 102 may be associated with the one or more issuer servers 110.

In one embodiment, the one or more issuer servers 110 are associated with one or more financial institutions normally called as "issuer banks" or "issuing banks" or simply "issuers", in which the user 102 may have payment accounts, (which also issue payment cards, such as credit cards or debit cards), and provide micro-finance banking services (e.g., payment transaction using credit/debit cards) for processing electronic payment transactions, to the user 102.

In one example, sometimes, the user 102 may use certain payment instruments at specific merchants only or may randomly use any of the plurality of payment instruments at the merchant 106. The time span of usage of payment cards 104 may also differ for the payment card 104a, the payment card 104b and the payment card 104c. For example, the user 102 may be using payment card 104a and payment card 104b for two years but the user 102 may be using payment card 104c from only three months.

Since, there is always a possibility that the user 102 may use his payment cards 104a, 104b and 104c in a manner such that a single issuer associated with one of the payment cards may not identify fraudulent activities. In such technical problems, transaction history of all the payment cards associated with the user 102 is required at one hand so that the system can analyze spending patterns of the payment cards in efficient manner.

Earlier, the time-dependent transaction information of the plurality of payment instruments that may be associated with one or more different issuers was not accessible easily at a single end. Thus, the time-dependent transaction information of the plurality of payment instruments may be recorded by the respective one or more issuer servers 110.

However, with flourishing of OPEN banking, at the user consent, it becomes easier for third parties or the server system 108 to access transaction information from the one or more issuers 110. Thus, the time-dependent transaction information of the plurality of payment instruments of the user 102 may be accessed from a central repository (i.e., transaction database 116) or from the payment server 114.

The time-dependent transaction information related to each of the payment transactions performed using the payment cards 104 may include, but is not limited to, the amount of spend, merchant category code (MCC), merchant identifier, merchant risk profile, transaction time and date, transaction identifier, mode of payment, etc.

The server system 108 may be configured to perform one or more of the operations described herein. In one example, the server system 108 is embodied in the payment network 112. In general, the server system 108 may be configured to detect frauds in spends using a payment instrument (e.g., payment card 104a) at a merchant (e.g., merchant 106a) based on usage patterns or transactional level behaviors of other payment instruments (e.g., payment cards 104b and 104c) associated with the user 102 at the merchant (e.g., merchant 106a). In one embodiment, the server system is configured to utilize generative adversarial networks (GANs) model to simulate spending behavior from a primary payment instrument to one or more secondary payment instruments (or vice-a-versa) and detect any deviations of real-time transactional patterns to capture fraud/credit risk.

The server system 108 is a separate part of the environment 100 and may operate apart from (but still in communication with, for example, via the network 118) the issuer server 110, an acquirer server, the payment server 114, and any third party external servers (to access data to perform the various operations described herein). However, in other embodiments, the server system 108 may actually be incorporated, in whole or in part, into one or more parts of the environment 100, for example, the payment server 114 or the issuer servers 110. In addition, the server system 108 should be understood to be embodied in at least one computing device in communication with the network 118, which may be specifically configured, via executable instructions, to perform as described herein, and/or embodied in at least one non-transitory computer-readable media. In one embodiment, the payment server 114 associated with the payment network 112 is shown. The payment network 112 may be used by the payment cards issuing authorities as a payment interchange network. Examples of payment interchange networks include, but are not limited to, Mastercard^{®} payment system interchange network. The Mastercard^{®} payment system interchange network is a proprietary communications standard promulgated by Mastercard International Incorporated^{®} for the exchange of financial transaction data between financial institutions that are members of Mastercard International Incorporated^{®}. (Mastercard is a registered trademark of Mastercard International Incorporated located in Purchase, N.Y.).

The number and arrangement of systems, devices, and/or networks shown in FIG. 1 are provided as an example. There may be additional systems, devices, and/or networks; fewer systems, devices, and/or networks; different systems, devices, and/or networks, and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100.

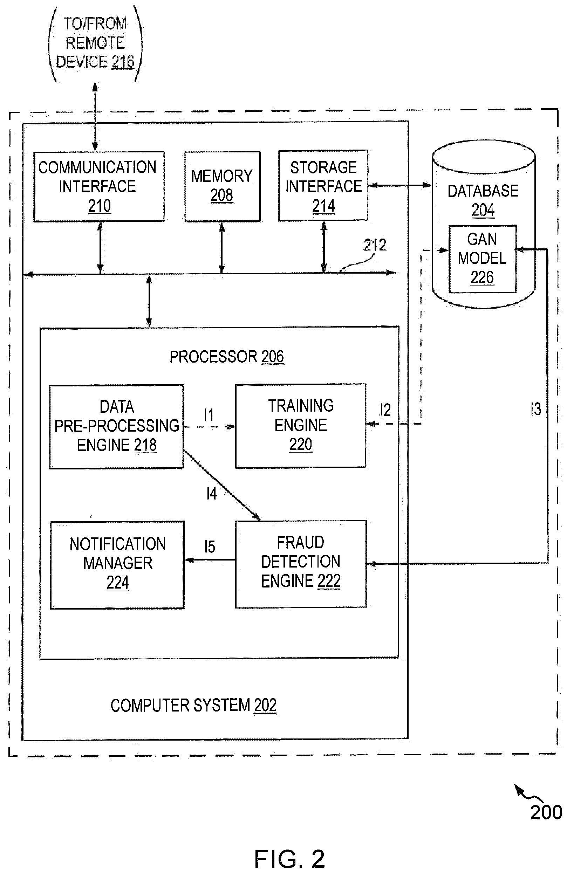

Referring now to FIG. 2, a simplified block diagram of a server system 200, is shown, in accordance with an embodiment of the present disclosure. For example, the server system 200 is similar to the server system 108 as described in FIG. 1. In some embodiments, the server system 200 is embodied as a cloud-based and/or SaaS-based (software as a service) architecture. In one embodiment, the server system 200 includes a computer system 202 and a database 204. The computer system 202 includes at least one processor 206 for executing instructions, a memory 208, and a communication interface 210. The one or more components of the computer system 202 communicate with each other via a bus 212.

In one embodiment, the database 204 is integrated within the computer system 202. For example, the computer system 202 may include one or more hard disk drives as the database 204. A storage interface 214 is any component capable of providing the processor 206 with access to the database 204. The storage interface 214 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the processor 206 with access to the database 204. In one embodiment, the database 204 is configured to store at least a trained generative adversarial network (GAN) model.

The processor 206 includes suitable logic, circuitry, and/or interfaces to execute computer-readable instructions for detecting fraudulent payment transactions based on multiple payment instruments (e.g., payment card) usage pattern for a user (e.g., cardholder).

Examples of the processor 206 include, but are not limited to, an application-specific integrated circuit (ASIC) processor, a reduced instruction set computing (RISC) processor, a complex instruction set computing (CISC) processor, a field-programmable gate array (FPGA), and the like. The memory 208 includes suitable logic, circuitry, and/or interfaces to store a set of computer-readable instructions for performing operations. Examples of the memory 208 include a random-access memory (RAM), a read-only memory (ROM), a removable storage drive, a hard disk drive (HDD), and the like. It will be apparent to a person skilled in the art that the scope of the disclosure is not limited to realizing the memory 208 in the server system 200, as described herein. In some embodiments, the memory 208 may be realized in the form of a database server or cloud storage working in conjunction with the server system 200, without deviating from the scope of the present disclosure.

The processor 206 is operatively coupled to the communication interface 210 such that the processor 206 is capable of communicating with a remote device 216 such as the issuer servers 110, the transaction database 116, and the payment server 114, or with any entity connected to the network 118 (e.g., as shown in FIG. 1). The data flows I1, I2, I3, I4 and I5 shown in Fig. 2 are for exemplary purposes only. It should be noted that the dotted lines denote the data flows during the training process and the solid lines denote the execution process described in the present disclosure.

It is noted that the server system 200 as illustrated and hereinafter described is merely illustrative of an apparatus that could benefit from the embodiments of the present disclosure and, therefore, should not be taken to limit the scope of the present disclosure. It is noted that the server system 200 may include fewer or more components than those depicted in FIG. 2.

In one embodiment, the processor 206 includes a data pre-processing engine 218, a training engine 220, a fraud detection engine 222, and a notification manager 224. It should be noted that the components, described herein, can be configured in a variety of ways, including electronic circuitries, digital arithmetic and logic blocks, and memory systems in combination with software, firmware, and embedded technologies. The database 204 includes a Generative adversarial network (GAN) model 226. In an alternate embodiment, the GAN model 226 may be stored in the memory 208 of the server system 200.

In one embodiment, the processor 206 is configured to predict frauds in spendings performed using a first payment instrument of the user 102 at a merchant (e.g., merchant 106a) based on multivariate payment transaction sequences associated with one or more second payment instruments associated with the same user 102 at the same merchant (e.g., merchant 106a). In one example, suppose, the user 102 has payment cards C1, C2...Cn.

In the training phase, the data pre-processing engine 218 includes suitable logic and/or interfaces for accessing payment transaction data of the plurality of payment instruments (e.g., payment cards C1, C2...Cn) associated with the user 102 from the transaction database 116. The payment transaction data includes, but is not limited to, transaction level behaviors of past payment transactions made using the plurality of payment instruments at various merchants (for example, merchant M1, merchant M2...merchant Mn). The past payment transactions are performed within a particular time duration (for example, last one year). The plurality of payment instruments may be one or a combination of e-wallet applications, payment accounts, payment cards (e.g., debit card, credit card, etc.), digital payment cards, etc. In one embodiment, the data pre-processing engine 218 is configured to perform data pre-processing (such as, normalization, symmetrical data preparation across the various merchants) over the payment transaction data of the plurality of payment instruments.

In one embodiment, the processor 206 is configured to select the first payment instrument from the plurality of payment instruments associated with the user 102 to spending patterns of the first payment instrument.

To predict frauds in payment transactions performed using the first payment instrument (e.g., the payment card C1) at a merchant (e.g., merchant M1), the data pre-processing engine 218 is configured to aggregate payment transaction data of the one or more second payment instruments (e.g., payment cards C2...Cn) excluding the first payment instrument (e.g., payment card C1) on a timely basis (such as, hourly, weekly, etc.), to obtain multivariate payment transaction sequence of the one or more second payment instruments. The aggregation may be made based on utilization of the one or second payment instruments (e.g., payment cards C2...Cn) at the various merchants on the timely basis within the particular time duration. In one embodiment, the frequency of aggregation can be defined as hourly, weekly, daily, monthly, quarterly, based on spend frequency associated with the user 102 at the various merchants.

In one embodiment, the data pre-processing engine 218 is configured to generate a transaction feature matrix corresponding to each combination of a merchant and a payment instrument, and determine payment transactional features (for example, spend at the merchant using the payment card). In one example, each column of the transaction feature matrix (i.e., 2D matrix) includes a value of a spending amount at the merchant at a particular timestamp. Each row of the transaction feature matrix corresponds to spending amounts at a specific merchant from the various merchants M1, M2...Mn aggregated on the timely basis. The column length of the transaction feature matrix may be defined based on the frequency of aggregation.

In another embodiment, instead of aggregating the payment transactions according to the various merchant names, the payment transactions may be aggregated based on merchant category codes. In this case, each row of the transaction feature matrix corresponds to spending amounts at a specific merchant category aggregated on the timely basis.

In particular, the data pre-processing engine 218 is configured to analyze payment transaction data of the one or more second payment instruments and determine values of the payment transactional features, which can be aligned in a time-series manner, for each combination of the one or more second payment instruments (e.g., payment cards C2...Cn) and the various merchants (e.g., merchants M1, M2...Mn).

In one example, suppose, the user 102 spends a total amount of $10, $20, $0, $40, $30, $15, $25 using a payment card C2 at a grocery merchant M1 on a daily basis in a week. The user 102 also spends a total amount of $3, $0, $20, $60, $0, $10, $30 using a payment card C2 at a petroleum merchant M2 on the daily basis in the same week. Thus, the multivariate payment transaction sequence for the payment card C2 can be represented in the following exemplary manner:

**Table 1**

| Merchant ID | Day 1 | Day 2 | Day 3 | Day 4 | Day 5 | Day 6 | Day 7 |
|---|---|---|---|---|---|---|---|
| M1 | $40 | $20 | $0 | $40 | $30 | $15 | $25 |
| M2 | $3 | $0 | $20 | $60 | $0 | $10 | $30 |

The payment transactional features for a payment instrument utilized at a particular merchant may also include, but not limited to, frequency of purchase at the merchant, average purchase amount at the merchant, types of products purchased, merchant risk profile, etc. In one embodiment, the data pre-processing engine 218 may be configured to add additional dimensionalities to represent spending patterns of a payment instrument at the particular merchant by adding other payment transactional features as well.

In other words, the data pre-processing engine 218 forms a multi-dimensional matrix of the past payment transactions associated with the payment cards C2...Cn to obtain the multivariate payment transaction sequence associated with the payment cards C2...Cn. The multivariate payment transaction sequence may be in the form of a 2D matrix that is suitable for providing as an input to a neural network model.

Additionally, the data pre-processing engine 218 is configured to generate a real univariate payment transaction sequence of the first payment instrument (e.g., payment card C1) by aggregating one or more payment transactional features (such as, payment transaction amounts) associated with payment transactions using the first payment instrument (e.g., payment card C1) made at a particular merchant (for example merchant M1).

In a similar manner, the data pre-processing engine 218 is configured to generate a combination of paired observations of multivariate payment transaction sequence of the one or more second payment instruments (for example, payment cards C1, C3...Cn) and a real univariate payment transaction sequence of the first payment instrument (for example, payment card C2). The lengths of multivariate payment transaction sequence and the real univariate payment transaction sequence are determined based on the frequency of aggregation of the spending amounts within the particular time duration.

In an example embodiment, when a payment transactional feature such as the amount of spend is aggregated, the number of merchants may change for each of the one or more second payment instruments. To handle the varying length of merchants, the data pre-processing engine 218 may first represent each merchant in the form of an n-dimensional vector. Further, the n-dimensional vector associated with each merchant is aggregated. The aggregation of the n-dimensional vectors may be an average of n-dimensional representations across all the merchants or it may be a sum of n-dimensional representations across all the merchants.

In one embodiment, the training engine 220 includes suitable logic and/or interfaces for training a generative adversarial network (GAN) model to detect fraudulent spend transactions of the first payment instrument performed at the various merchants. More illustratively, the GAN model 226 is responsible for detecting frauds in spending patterns of the plurality of payment instruments which the user 102 holds. The training engine 220 is configured to receive the multivariate payment transaction sequence of the plurality of second payment instruments and the real univariate payment transaction sequence of the first payment instrument (see, data flow I1 in the FIG. 2).

In one embodiment, the GAN model 226 includes a first neural network model (i.e., generator neural network model) and a second neural network model (i.e., discriminator neural network model). The first and second neural network models are mutually trained. In one embodiment, the training engine 220 is configured to provide or feed the multivariate payment transaction sequence of the one or more second payment instruments (e.g., payment cards C2...Cn) to the generator neural network model. The generator neural network model is configured to generate a simulated univariate payment transaction sequence of the first payment instrument based on the multivariate payment transaction sequence of the plurality of payment instruments.

In one embodiment, input of the generator neural network model is conditioned on a merchant corresponding to which simulated univariate payment transaction sequence of the first payment instrument is generated. In other words, the training engine 220 also provides a merchant flag vector to the generator neural network model indicating a specific merchant. In another embodiment, the merchant flag vector to the generator neural network model indicates a specific merchant category code (MCC).

For example, to train the GAN model 226 for predicting frauds at the merchant M1 in spendings performed using the payment card C1 by the user 102, the training engine 220 is configured to feed the merchant flag vector indicating the merchant M1 in the generator neural network model that results in conditioning on the input (i.e., multivariate payment transaction sequence of the one or more second payment instruments). In particular, the multivariate payment transaction sequence of the one or more second payment instruments associated with the merchant M1 is provided as an input to the generator neural network model.

Thus, the merchant flag vector is provided selectively to learn distribution of spending patterns of the first payment instrument based on the spending patterns of the plurality of second payment instruments against one of the various merchants. Rather than training different GAN models for each merchant, a single GAN model is trained for the various merchants iteratively, thereby reducing time required for the training process.

The generator neural network model attempts to generate simulated univariate payment transaction sequence representing transactional level behavior of the first payment instrument (i.e., payment card C1). The second neural network model (i.e., discriminator neural network model) is configured to receive simulated univariate payment transaction sequence and the real univariate payment transaction sequence of the first payment instrument and discriminate between the real and simulated univariate payment transaction sequences.

For the simulated univariate payment transaction sequence determined as different by the discriminator neural network model, the generator neural network model is penalized and its neural network weights are adjusted accordingly. In other words, neural network parameters are adjusted in order to simulate spending patterns made at a specific merchant closer to the first payment instrument (i.e., payment card C1) which the user 102 holds. In one embodiment, the training engine 220 may penalize the generator and discriminator neural network models by adjusting their neural network weights until the generator neural network model can simulate univariate payment transaction sequence of the first payment instrument similar to the real univariate payment transaction sequence of the first payment instrument.

In one embodiment, when the GAN model 226 is trained in the above specific fashion, the input to the generator neural network model can be conditioned on a set of merchants against which a spending pattern of the first payment instrument is learnt. The training engine 220 is configured to train the GAN model 226 for a merchant of the various merchants at once, and the same will be carried out for all the various merchants exclusively.

Even though the above training process is described where the spending amounts associated with the payment transactions is being aggregated, it should be noted that the training may be performed by aggregating other payment transactional features such as, the frequency of payment transactions at the particular merchant, or average amount of purchase at the particular merchant, and the like.

It should be noted that the GAN model 226 is configured to learn spending patterns for a merchant or a set of merchant made using a first payment instrument other than the one or more second payment instruments used as an input for the generator neural network model. In one embodiment, the trained GAN model 226 is stored in the database 204.

Once the GAN model 226 is trained for various combinations of the first payment instrument and one or more second payment instruments, the GAN model 226 is configured to utilize in real-time to simulate spending of one of the plurality of payment instruments using spending patterns across other payment instruments of the plurality of payment instruments.

In the prediction or execution phase, the data pre-processing engine 218 is configured to receive payment transaction data associated with a first payment instrument (for example, payment card C1) of the user 102. The payment transaction data includes information of a recent payment transaction performing at a particular merchant (e.g., merchant M1). The payment transaction data may correspond to the recent payment transaction that is happening in real-time or the payment transaction that has happened in recent times that has to be checked for a possibility of fraud.

The data pre-processing engine 218 is configured to access past payment transactions of one or more second payment instruments possessed by the user over a threshold of period of time (for example, last 10 hours) from the transaction database 116. The past payment transactions are performed using the one or more second payment instruments at the particular merchant (e.g., merchant M1) over the threshold period of time. The data pre-processing engine 218 is configured to aggregate the past payment transactions on timely basis to generate multivariate payment transaction sequence associated with the one or more second payment instruments. The threshold period of time maybe ten hours, a week, or the like. The threshold period of time may be set by the issuer servers 110.

Then, the data pre-processing engine 218 is also configured to aggregate previous spendings associated with the first payment instrument made at the particular merchant (e.g., merchant M1) over the threshold period of time along with the recent payment transaction to generate a real univariate payment transaction sequence of the first payment instrument.

The data pre-processing engine 218 is configured to provide the multivariate payment transaction sequence associated with the one or more second payment instruments and the real univariate payment transaction sequence of the first payment instrument to the fraud detection engine 222 (see, arrow 13).

In one embodiment, the fraud detection engine 222 includes suitable logic and/or interfaces for predicting or determining whether the payment transaction performed by the first payment instrument is fraudulent or not. In particular, the fraud detection engine 222 is configured to access a trained GAN model from the database 204 (see, arrow 14).

The generator neural network model of the trained GAN model 226 is fed with the multivariate payment transaction sequence of the one or more second payment instruments to predict a simulated univariate payment transaction sequence of the first payment instrument. The simulated univariate payment transaction sequence includes a vector of payment transaction amounts which include values of the payment transaction (i.e., which is to be checked for fraud) along with past payment transaction amounts over the threshold period of time.

In an example, the simulated univariate payment transaction sequence may be of a preset length such as 10, 12, or the like. The preset length defines frequency of aggregation for aggregating amounts of spend at the particular merchant made using the first payment instrument. When the preset length is 10, the simulated univariate payment transaction may have 10 aggregated amount of spend out of which there are 9 already observed amounts of spend at the merchant and one amount of spend corresponding to the current transaction that is to be determined fraud based on the usage behavior of the second payment instrument at the particular merchant.

Thereafter, the fraud detection engine 222 is configured to provide the simulated univariate payment transaction sequence and the real univariate payment transaction sequence of the first payment instrument to the discriminator neural network model of the trained GAN model 226. The real univariate payment transaction sequence may also have the same preset length as in the simulated univariate payment transaction sequence. For example, when the simulated univariate payment transaction sequence has a length of 10 aggregated amount of spend at the particular merchant, the real univariate payment transaction sequence may also have 10 aggregated amount of spend at the particular merchant including the payment transaction that is being checked for fraud.

The discriminator neural network model is configured to compare the simulated univariate payment transaction sequence and the real univariate payment transaction sequence. The discriminator neural network model provides a deviation value as an output based on the comparison. When the deviation value is greater than a predetermined threshold value, the fraud detection engine 222 is configured to mark the payment transaction as suspicious and/or fraudulent.

Thereafter, the fraud detection engine 222 may transmit a signal to the notification manager 224. (See, arrow 15).

In one embodiment, the notification manager 224 is configured to send an alert to an issuer server regarding possible frauds in payment transactions corresponding to a payment instrument at the particular merchant. In some embodiments, the alert message may be sent to the issuer server associated with the first payment instrument along with the deviation value. The issuer server may further determine whether to approve or decline the transaction and/or send a warning or an alert to the user 102 regarding a possible fraudulent payment transaction in one of the plurality of payment instruments of the user 102.

In one embodiment, the GAN model 226 is trained periodically or as the performance of the GAN model 226 deteriorates. To determine the deterioration of the GAN model 226, the processor 206 is configured to determine deterioration in the performance of the GAN model based on the number of false positives or falsely suspected fraud triggers. Practically, when the GAN model 226 is freshly trained and deployed, the number of false positives or falsely suspected fraud triggers is minimally low. However, over the course of time, the number of false positives increases. When the processor 206 determines an increase in the number of false positives, the processor 206 is configured to update the GAN model 226 according to the changing trend/pattern in user's utilization of their payment instruments such as the payment cards 104 of the user 102.

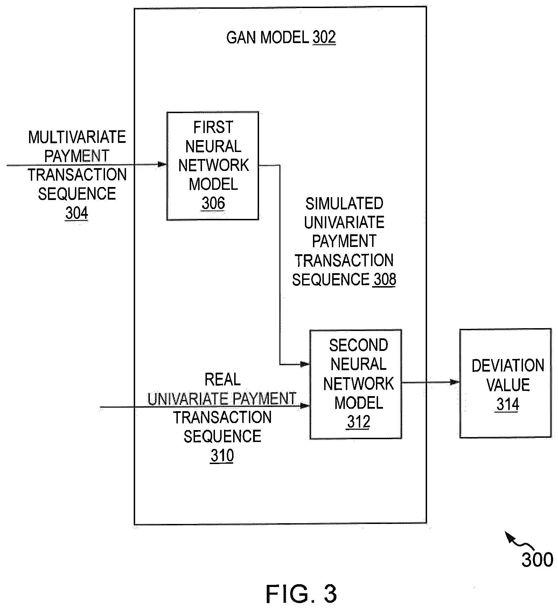

FIG. 3 illustrates a schematic representation 300 of a generative adversarial network (GAN) model 302 with respective inputs and outputs, in accordance with an embodiment of the present disclosure. The GAN model 302 may include two neural network models namely, first neural network model 306 and a second neural network model 312. The first neural network model 306 maybe a generator neural network model and the second neural network model 312 may be a discriminator neural network model.

In the training phase, the GAN model 302 is trained for detecting possible frauds in a payment transaction made at a merchant (e.g., merchant 106a) using a first payment instrument (e.g., payment card 104a). At first, the processor 206 is configured to provide multivariate payment transaction sequence 304 associated with the one or more second payment instruments (e.g., payment cards 104b, and 104c) of the same user to the first neural network model 306. The multivariate payment transaction sequence associated with the payment cards 104b and 104c may include aggregated payment transactional features (such as, merchant-wise amount of spent made using the payment cards 104b and 104c) within a particular time duration. The aggregation of the payment transactional features may be determined based on the threshold period of time ranging from hourly aggregation, daily aggregation, weekly aggregation, monthly aggregation, etc. In an embodiment, along with the multivariate payment transaction sequence 304, a merchant flag vector indicating the merchant 106a is provided as input to the first neural network model 306.

The first neural network model 306 is configured to generate a simulated univariate payment transaction sequence 308 associated with the payment card 104a of the user 102. The GAN model 302 may also receive real univariate payment transaction sequence associated with the payment card 104a from the data pre-processing engine 218. The real univariate payment transaction sequence may be generated by utilizing the previous spendings of the payment card 104a at the merchant 106a within the particular time duration.

Further, the simulated univariate payment transaction sequence 308 and the real univariate payment transaction sequence 310 are provided as input to the second neural network model 312. The second neural network model 312 including a discriminator neural network model is configured to calculate a deviation value 314 by comparing the simulated univariate payment transaction sequence 308 and a real univariate payment transaction sequence 310. The discriminator neural network model may calculate the deviation value based on the level of difference between the simulated univariate payment transaction sequence 308 and the real univariate payment transaction sequence 310.

In an embodiment, if the deviation value 314 depicts that the simulated univariate payment transaction sequence is distinct from the real univariate payment transaction sequence, the first neural network model 306 is penalized and its neural network weights are adjusted accordingly. In other words, neural network parameters are adjusted in order to simulate spending patterns made at the merchant 106a closer to the spending patterns of real payment transactions of card 104a that the user 102 holds.

In one embodiment, when the GAN model 302 is trained in the above specific fashion, the input to the first neural network model 306 can be conditioned on a set of merchants 106 against which spending pattern of the first payment instrument is learnt. The GAN model 302 is trained for a merchant of the various merchants at once, and the same will be carried out for all the various merchants exclusively.

Even though the above training process is described where the amount of spend associated with the payment transactions is being aggregated, it should be noted that the training may be performed by aggregating other payment transactional features such as, the frequency of payment transactions at the particular merchant 106b, or average amount of purchase at the particular merchant 106b, and the like.

Once the GAN model 302 is trained for various combinations of the plurality of payment instruments (such as payment card 104a) dividing into a first payment instrument and one or more second payment instruments, the GAN model 302 is configured to be utilized in real time, to simulate spending on one of the plurality of payment instruments using spending patterns across other payment instruments of the plurality of payment instruments.

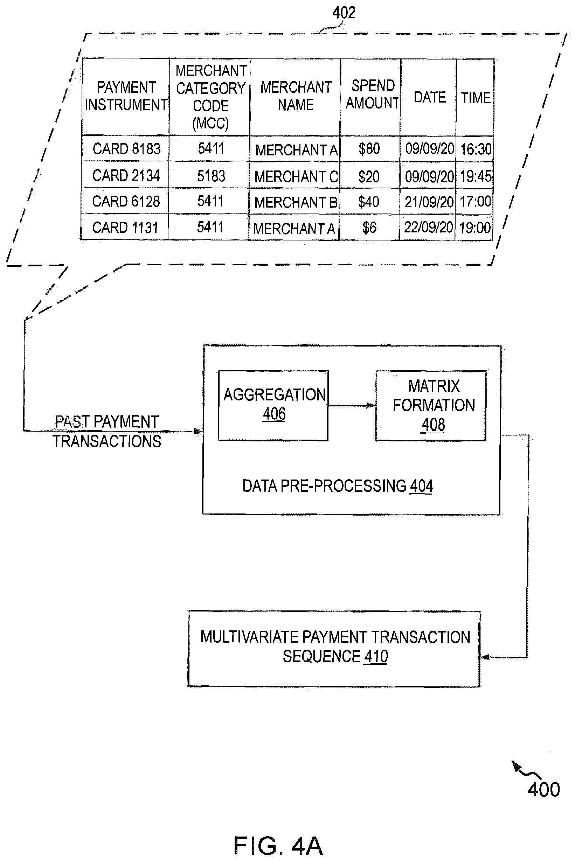

Referring now to FIG. 4A, a schematic block diagram representation 400 of a process flow for generating multivariate payment transaction sequence associated with one or more second payment instruments, is shown, in accordance with an embodiment of the present disclosure.

The processor 206 is configured to access the past payment transactions (see, table 402) associated with the one or more second payment instruments of the user 102 from the transaction database 116. Each past payment transaction may include data fields such as the payment instrument, merchant category code (MCC), transaction amount, date, time of transaction, etc.,. The processor 206 is configured to perform data pre-processing (see 404) over the accessed past payment transactions and aggregate them based on payment transactional features (such as, the amount of spend at the plurality of merchants over a particular period of time such as 6 months) and then form a transaction feature matrix for each of the plurality of payment instruments. For example, the transaction feature matrix for a payment instrument may include spend at each of the plurality of merchants.

In an embodiment, during an execution phase, the processor 206 is configured to pre-process and aggregate past payment transactions made using the one or more second payment instruments over a threshold period of time such as 10 hours, 10 days, etc.

The processor 206 is configured to aggregate the amount of spend at each of the plurality of merchants for the one or more second payment instruments (see, 406). Further, matrix formation may be performed to obtain a 2-D matrix for each of the one or more second payment instruments (see, 408). In an embodiment, the matrix formation may result in a multivariate payment transaction sequence (see 410). The 2-D matrix of each of the plurality of payment instruments is transaction feature matrix that can be provided to the first neural network model of the GAN model as an input.

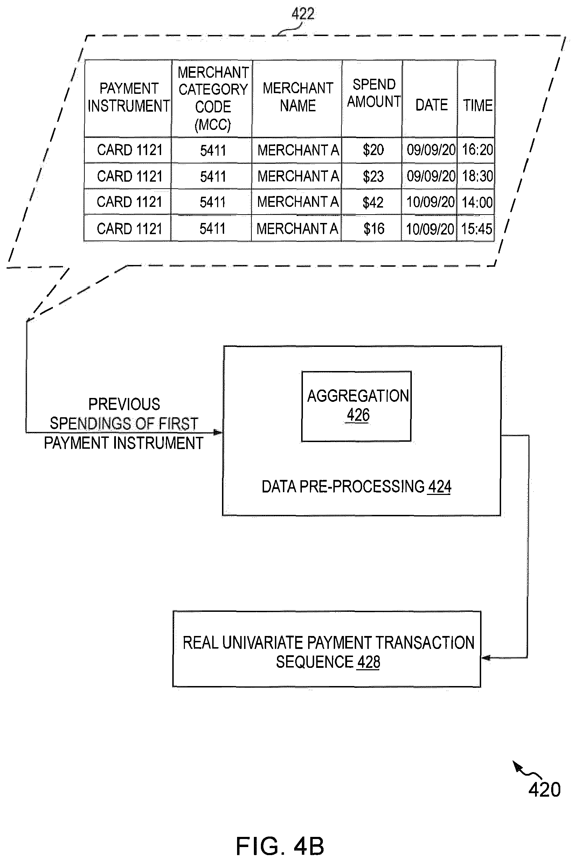

FIG. 4B is a schematic block diagram representation 420 of a process flow for generating a real univariate payment transaction sequence associated with a first payment instrument, in accordance with an embodiment of the present disclosure.

The processor 206 is configured to access the previous spendings (see, table 422) associated with the first payment instrument such as the payment card 104a from the transaction database 116. Each previous spending may include data fields such as the payment instrument, merchant category code (MCC), amount, date, time, etc., (see table 422). Since the previous spendings are extracted only for the first payment instrument, the payment instrument identifier field is the same exemplarily shown as 'CARD 1121'.

In the training phase, the processor 206 is configured to perform data pre-processing (see 424) over the accessed previous spendings and aggregate the previous spendings based on the amounts of spend at the particular merchant (e.g., the merchant 106a) over the particular period of time (see, 426). Then, the processor 206 is configured to form a transaction feature vector for the first payment instrument. A single transaction feature vector may be formed based on the amount of spend at the particular merchant using the first payment instrument. Hence, the output of this data pre-processing process is a real univariate payment transaction sequence 428.

In the execution phase, the real univariate payment transaction sequence 428 for the first payment instrument such as the payment card 104a may include the previously observed amount of spends at the merchant 106a by the payment card 104a. The processor 206 is configured to aggregate the previous spending at the merchant 106a made using the first payment instrument over a threshold period of time such as 10 hours, 10 days, etc.

In another embodiment, instead of the amount of spend, any other payment transactional features such as the time of the payment transaction may be aggregated and a univariate payment transaction sequence may be formed.

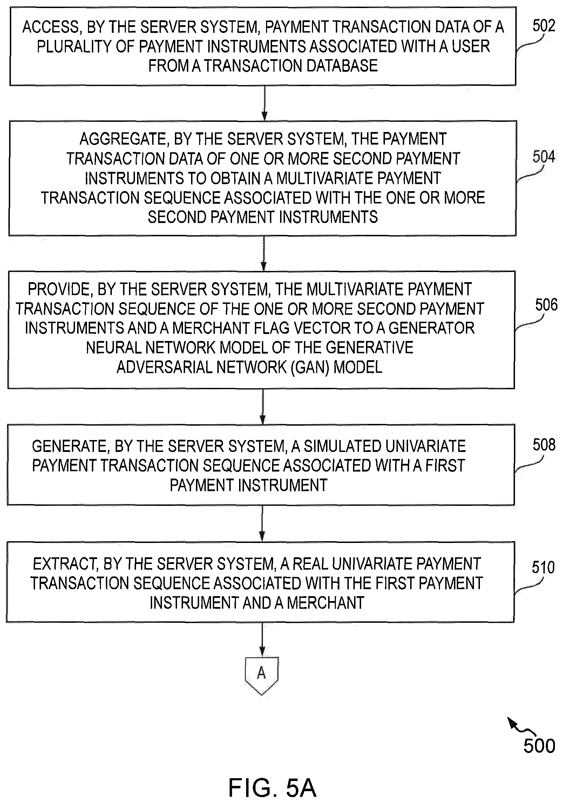

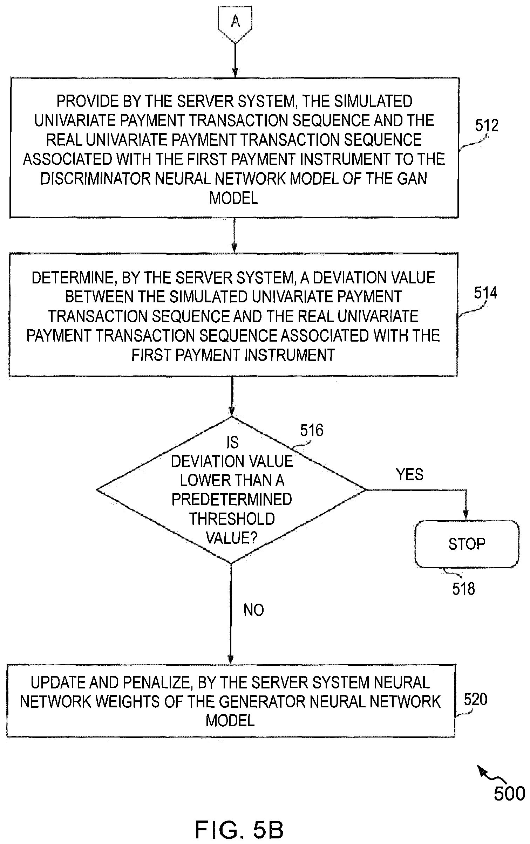

FIGS. 5A and 5B, collectively, represent a flow diagram 500 of a training process of a generative adversarial network (GAN) model, in accordance with an embodiment of the present disclosure. The process flow depicted in the flow diagram 500 may be performed by, for example, a server system such as the server system 200. Operations of the process flow, and combinations of operation in the method may be implemented by, for example, hardware, firmware, a processor, circuitry, and/or a different device associated with the execution of software that includes one or more computer program instructions. The process flow starts at operation 502.

As described above, the GAN model includes a first neural network model (i.e., generator neural network model) and a second neural network model (i.e., discriminator neural network model). The GAN model 226 is responsible for detecting frauds in spending patterns of the plurality of payment instruments which the user 102 holds. The generator neural network model learns to generate or simulate transactional level behavior of a first payment instrument (i.e., a target payment instrument corresponding which spend frauds need to checked) while the discriminator neural network model learns to distinguish the simulated transactional level behavior against real transactional level behavior of the first payment instrument.

Thus, the generator neural network model is trained to output transactional level behavior of the target payment instrument taking transactional level behavior of one or more second payment instruments of the user 102 as an input.

In one example, the user has three different payment accounts A1, A2 and A3. The user performs spend transactions at various merchants M1, M2 and M3 using the payment accounts A1, A2 and A3.

At the operation 502, the server system 200 accesses payment transaction data of a plurality of payment instruments (e.g., payment accounts A1, A2, A3) associated with the user 102 from a transaction database 116. The payment transaction data includes, but is not limited to, transaction level behaviors of past payment transactions made using the plurality of payment instruments (e.g., payment accounts A1, A2, A3) at the various merchants (for example, merchant M1, merchant M2, merchant M3). The past payment transactions are performed within a particular time duration (for example, last one year).

In order to train the GAN model for predicting frauds in spends associated with a first payment instrument (e.g., payment account A2) from the plurality of payment instruments at the merchant M1, at 504, the server system 200 aggregates payment transaction data of payment instruments (i.e., one or more second payment instruments) other than the first payment instrument of the user on timely basis. The payment transaction data is associated with past payment transactions performed at the various merchants. According to the above example, the one or more second payment instruments are payment accounts A1 and A3.

The server system 200 then generates multivariate payment transaction sequence of the one or more second payment instruments (e.g., payment accounts A1 and A3). The multivariate payment transaction sequence for the one or more second payment instruments may include, but not limited to, payment transactional features such as, spending amount at a merchant, frequency of purchase at the merchant, average purchase amount at the merchant, etc.

At 506, the server system 200 provides the multivariate payment transaction sequence of the one or more second payment instruments (e.g., payment accounts A1 and A3) and a merchant flag vector corresponding to the merchant M1, to the generator neural network model of the GAN model. To train the GAN model for predicting frauds at the merchant M1 in spending performed using the first payment instrument A2, the merchant flag vector indicating the merchant M1 is provided to the generator neural network model that results in conditioning on the multivariate payment transaction sequence of the one or more second payment instruments specific to the merchant M1.

In one example, suppose, the user has two payment cards C1 and C2. To train the GAN model for predicting frauds in spends for the payment card C1 at a particular merchant, the generator neural network model is fed with a payment transaction sequence of other remained payment card C2 of the user at the particular merchant. In similar manner, for training the GAN model for predicting frauds in spends for the payment account A2 at the particular merchant, the generator neural network model is fed with a payment transaction sequence of the payment account A1 at the particular merchant.

At 508, the server system 200 generates the simulated univariate payment transaction sequence associated with the first payment instrument (e.g., payment account A2) , based, at least, in part on the multivariate payment transaction sequence.

At 510, the server system 200 extracts a real univariate payment transaction sequence associated with the first payment instrument (e.g., payment account A2) and the merchant M1. The server system 200 aggregates payment transactional features (such as, payment transaction amounts) associated with payment transactions made at the merchant (for example, merchant M1) using the first payment instrument (e.g., payment account A2) and generates the real univariate payment transaction sequence based on the aggregated payment transactional features.

At 512, the server system 200 provides the simulated univariate payment transaction sequence and the real payment transaction sequence associated with the first payment instrument to the discriminator neural network model (i.e., second neural network model) of the GAN model.

At 514, the server system 200 determines a deviation value between the simulated univariate transaction sequence and the real payment transaction sequence associated with the first payment instrument (e.g., payment account A2).

At 516, the server system 200 checks whether the deviation value is lower than a predetermined threshold value, or not.

When the deviation value is lower than a predetermined threshold value, at 518, the server system 200 stops the training process.

Otherwise, at 520, the server system 200 updates and penalizes neural network weights of the generator neural network model to simulate univariate payment transaction sequence of the first payment instrument similar to the real payment transaction sequence of the first payment instrument (e.g., payment account A2) such that the discriminator neural network model is unable to find any deviation value. The steps 506-520 are performed iteratively so that the generator and discriminator neural network models of the GAN model are trained mutually. The generator and discriminator neural network models are mutually trained in a selective manner for all the combinations of payment instruments of the user and merchants where the user performs payment transactions.

According to the above example, the GAN model is trained to predict frauds for the payment account A2 using payment transaction sequence associated with the other payment accounts A1 and A3. Similarly, the same GAN model could be trained for predicting frauds for the payment account A3 using payment transaction sequence associated with the other payment accounts (A1 and A2). Thus, the GAN model may be trained to predict frauds in spends of any one of the payment instruments of the user, using multivariate payment transaction sequence of the other payment instruments.

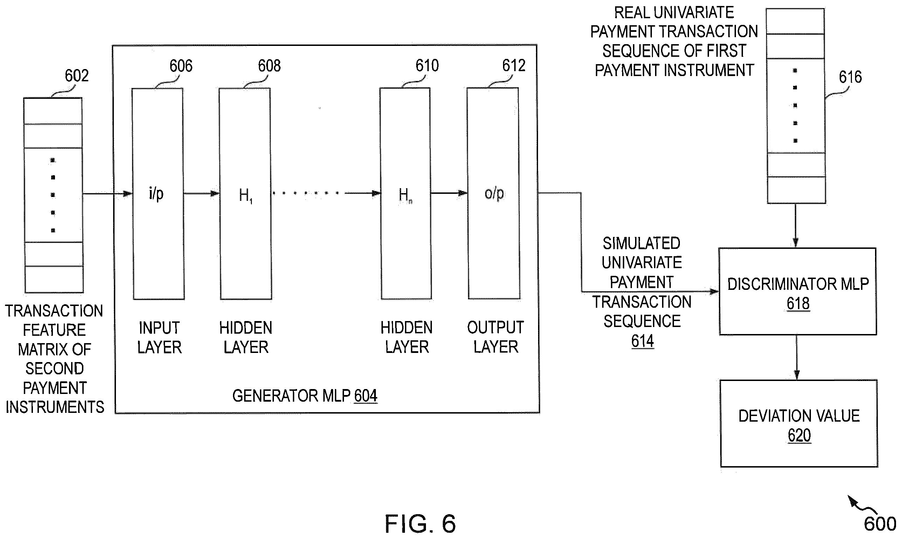

FIG. 6 illustrates a schematic representation of network architecture of GAN model 600 with multi-layer perceptron (MLP) architecture, in accordance with one embodiment of the present disclosure. As mentioned above, the GAN model 600 utilizes transactional level behavior of the one or more second payment instruments to model spend at the first payment instrument for the same user. The GAN model 600 includes a first neural network model (i.e., generator neural network model) and a second neural network model (i.e., discriminator neural network model). In one embodiment, the generator and discriminator neural network models may be implemented using one of neural networks such as, multi-layer perceptron (MLP), recurrent neural networks (RNN), or convolutional neural networks (CNN), etc.

As described earlier, the generator neural network model is provided with multivariate payment transaction sequence of the one or more second payment instruments to generate simulated univariate payment transaction sequence of the first payment instrument (for which the fraud is to be checked).

In one embodiment, the GAN model 600 is implemented with the MLP neural network architecture when input to the generator neural network model is univariate. For example, when the user has two payment cards, for modeling the GAN model 600 to predict frauds in one payment card, the generator neural network model is fed with the univariate payment transaction sequence with another payment card.

The GAN model 600 includes a generator MLP 604 and a discriminator MLP 618. The generator MLP 604 is the first neural network model that is configured to generate the simulated univariate payment transaction sequence. The discriminator MLP 618 is the second neural network model that is configured to calculate a deviation value between the simulated payment transaction sequences and the real payment transaction sequences.

The generator MLP 604 includes linear layers including an input layer 606, hidden layers 608 and 610, and an output layer 612. A transaction feature matrix 602 of one or more second payment instruments (i.e., multivariate payment transaction sequence) provided to the generator MLP 604 passes through all the layers and a simulated univariate payment transaction sequence 614 of the first payment instrument is generated. The simulated univariate payment transaction sequence is then provided to the discriminator MLP 618 along with the real univariate payment transaction sequence 616 associated with the first payment instrument.

The discriminator MLP 618 includes a neural network model similar to the generator MLP 604. The discriminator MLP 618 is configured to compare the inputs and calculate a deviation value between the inputs. Further, the GAN model 600 may determine whether the payment transaction is fraud or not based on the deviation value calculated by the discriminator MLP 618.

The generator MLP 604 including various layers such as 606-612 is trained to generate a simulated univariate payment transaction sequence 614 associated with the first payment instrument based on the multivariate payment transaction sequence and a merchant flag vector. The simulated univariate payment transaction sequence 614 may be of a preset length such as 10, 12, or the like. The preset length defines the number of aggregated payment amount of spends at the particular merchant made by the first payment transaction that will be generated by the generator MLP 604.

Further, in the example embodiment, the simulated univariate payment transaction sequence 614 is provided to the discriminator MLP 618 along with the real univariate payment transaction sequence 616 associated with the first payment instrument. The discriminator MLP 618 is configured to compare the real payment transaction sequence associated with the first payment instrument and the simulated univariate payment transaction sequence 614 and calculate a deviation value 620. In an embodiment, the deviation value 620 may determine if a payment transaction is fraudulent or not. In one example, the deviation value 620 may be a binary value.

In another embodiment, the GAN model 600 may be implemented with the RNN architecture. The GAN model 600 with the RNN architecture is preferred when the user 102 has two or more payment instruments. The GAN model 600 with the RNN architecture is utilized for generating multivariate dataset which may have time-variant features. The GAN model 600 is configured to process the data in sequential manner while maintaining sequential nature of payment transaction using multi-variate RNNs or its variants. Thus, the GAN model can also be trained with sequential nature of spend patterns thereby the GAN model learns to maintain the context of spend transactions.

In yet another embodiment, the GAN model 600 may also be implemented using convolutional neural network (CNN) architecture. The GAN model 600 with the CNN architecture performs convolution functions along with time horizon and filter width of convolutional filters is equal to the number of features used in each time stamp. To account for varying the time horizon, the processor 206 is configured to utilize window-based approach for aggregation. For example, a first payment instrument having shorter transaction history is matched against transaction data of one of the payment instruments of the user 102 with longer transaction history over the same time horizon. For sake of clarity, a payment transaction sequence can be represented taking each individual transactions aggregating on timely basis (such as, bi-weekly, monthly or quarterly, etc.).

It should be noted that the implementation of the GAN model 600 using the MLP does not limit the scope of the present technology. The present technology can also be implemented using neural networks such as CNN, RNN, and the like.

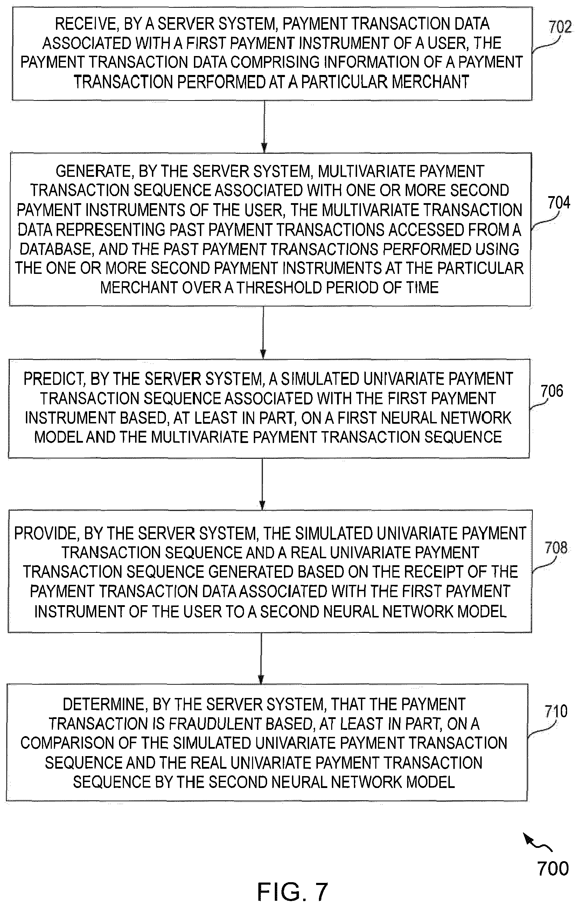

FIG 7 represents a flow diagram of a computer-implemented method 700 for detecting fraudulent spend transactions made by a first payment instrument of a user, in accordance with an example embodiment of the present disclosure. The method 700 depicted in the flow diagram may be executed by the server system 108 which may be a standalone server or a server as a whole incorporated in the payment server 114 or one or more issuer servers 110. Operations of the method 700, and combinations of operation in the method 700, may be implemented by, for example, hardware, firmware, a processor, circuitry, and/or a different device associated with the execution of software that includes one or more computer program instructions. The method 700 starts at operation 702.

At 702, the method 700 includes receiving, by a server system 108, payment transaction data associated with a first payment instrument (e.g., payment card 104a) of the user 102. The payment transaction data may include information of a payment transaction performed at a particular merchant. In one embodiment, the payment transaction data may be received in real-time when the payment transaction is being performed by the user 102.

At 704, the method 700 includes generating, by the server system 108, multivariate payment transaction sequence associated with one or more second payment instruments such as the payment cards 104b and 104c of the user 102. The multivariate payment transaction sequence represents past payment transactions accessed from the transaction database 116, and the past payment transactions are performed using the one or more second payment instruments at the particular merchant such as the merchant 106b over a threshold period of time. The threshold period of time maybe ten hours, ten days, ten weeks, etc.

At 706, the method 700 includes predicting, by the server system 108, a simulated univariate payment transaction sequence associated with the first payment instrument such as the payment card 104a based, at least in part, on a first neural network model and the multivariate payment transaction sequence.

At 708, the method 700 includes providing, by the server system 108, the simulated univariate payment transaction sequence and a real univariate payment transaction sequence generated based on the receipt of the payment transaction data associated with the first payment instrument such as the payment card 104a of the user 102 to a second neural network model.

At 710, the method 700 includes determining, by the server system 108, that the payment transaction is fraudulent based, at least in part, on a comparison of the simulated univariate payment transaction sequence and the real univariate payment transaction sequence by the second neural network model.

The sequence of operations of the method 700 need not be necessarily executed in the same order as they are presented. Further, one or more operations may be grouped together and performed in form of a single step, or one operation may have several sub-steps that may be performed in parallel or a sequential manner.

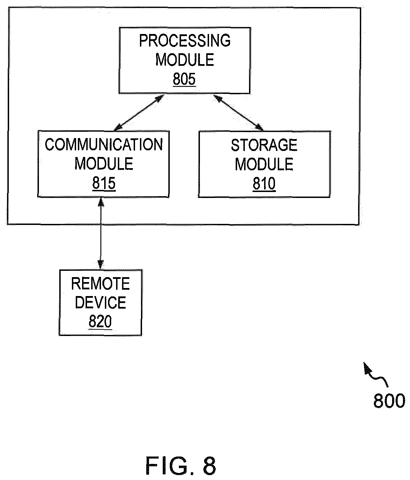

FIG. 8 is a simplified block diagram of an issuer server of the one or more issuer servers 110, in accordance with one embodiment of the present disclosure. The issuer server 800 is associated with an issuer bank/issuer, in which a user 102 may have an account, which enables the user 102 to perform payment transactions using a payment instrument such as one of the payment cards 104.

The issuer server 800 includes a processing module 805 operatively coupled to a storage module 810, and a communication module 815. The components of the issuer server 800 provided herein may not be exhaustive and that the issuer server 800 may include more or fewer components than that of depicted in FIG. 8. Further, two or more components may be embodied in one single component, and/or one component may be configured using multiple sub-components to achieve the desired functionalities. Some components of the issuer server 800 may be configured using hardware elements, software elements, firmware elements, and/or a combination thereof.

The storage module 810 is configured to store machine-executable instructions to be accessed by the processing module 805. Additionally, the storage module 810 stores information related to the user (i.e., the user 102) such as the contact information of the customer, payment account number (PAN), BINs, payment card details, internet banking information, PIN, mobile personal identification number (MPIN) for mobile banking, and the like. This information is retrieved by the processing module 805 for cross-verification during the processing of the payment transaction being performed by the user 102 using a payment instrument such as the card 104a. In one embodiment, the storage module 810 may also receive a trained GAN model such as the GAN model 226 of FIG.2, for storage.

The processing module 805 is configured to communicate with one or more remote devices such as a remote device 825 using the communication module 815 over a network such as the network 118 or the payment network 112 of FIG. 1. The examples of the remote device 820 include the payment server 114, an acquirer server, the server system 200, or any other computing systems of the payment network 112 and the like. The communication module 815 is capable of facilitating such operative communication with the remote devices using API (Application Program Interface) calls.

In one embodiment, the issuer server 800 may also perform similar operations as performed by the server system 200 for determining if a payment transaction performed using a first payment instrument of a user is fraud or not.

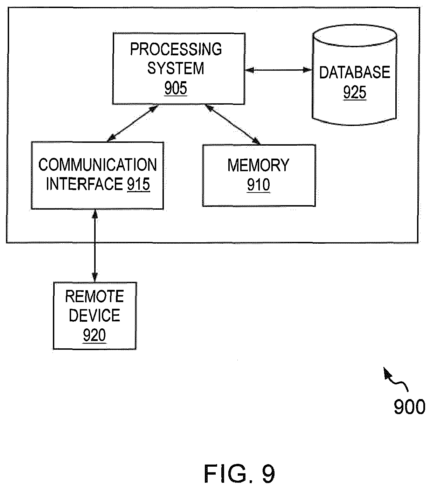

FIG. 9 is a simplified block diagram of a payment server 900, in accordance with one embodiment of the present disclosure. The payment server 900 is an example of the payment server 116 of FIG. 1. In one embodiment, the payment server 900 may be embodied in the payment network, such as the payment network 112 of FIG.1. The payment network 112 may be used by the payment server 900, the issuer server 110, and an acquirer server as a payment interchange network. Examples of payment interchange networks include, but are not limited to, Mastercard^{®} payment system interchange network. The payment server 900 includes a processing system 905 configured to extract programming instructions from a memory 910 to provide various features of the present disclosure. The components of the payment server 900 provided herein may not be exhaustive and that the payment server 900 may include more or fewer components than that of depicted in FIG. 9. Further, two or more components may be embodied in one single component, and/or one component may be configured using multiple sub-components to achieve the desired functionalities. Some components of the payment server 900 may be configured using hardware elements, software elements, firmware elements, and/or a combination thereof.

Via a communication interface 915, the processing system 905 receives information from a remote device 920 such as the server system 200, the issuer server 800, or the acquirer server. The payment server 900 includes a database 925. The database 925 may include past payment transactions data associated with the plurality of payment instruments of a plurality of users, and a trained GAN model. Further, the payment server 900 may also perform similar operations as performed by the server system 200 for determining if a payment transaction performed using a first payment instrument of a user is fraud or not. For the sake of brevity, the detailed explanation of the payment server 900 is omitted herein with reference to the FIGS. 1 and 2.

The disclosed method 700 with reference to FIG. 7 or one or more operations of the server system 200 may be implemented using software including computer-executable instructions stored on one or more computer-readable media (e.g.,, non-transitory computer-readable media, such as one or more optical media discs, volatile memory components (e.g.,, DRAM or SRAM), or nonvolatile memory or storage components (e.g.,, hard drives or solid-state nonvolatile memory components, such as Flash memory components) and executed on a computer (e.g.,, any suitable computer, such as a laptop computer, net book, Web book, tablet computing device, smart phone, or other mobile computing device). Such software may be executed, for example, on a single local computer or in a network environment (e.g.,, via the Internet, a wide-area network, a local-area network, a remote web-based server, a client-server network (such as a cloud computing network), or other such network) using one or more network computers. Additionally, any of the intermediate or final data created and used during implementation of the disclosed methods or systems may also be stored on one or more computer-readable media (e.g.,, non-transitory computer-readable media) and are considered to be within the scope of the disclosed technology. Furthermore, any of the software-based embodiments may be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

Although the invention has been described with reference to specific exemplary embodiments, it is noted that various modifications and changes may be made to these embodiments without departing from the broad spirit and scope of the invention. For example, the various operations, blocks, etc., described herein may be enabled and operated using hardware circuitry (for example, complementary metal oxide semiconductor (CMOS) based logic circuitry), firmware, software and/or any combination of hardware, firmware, and/or software (for example, embodied in a machine-readable medium). For example, the apparatuses and methods may be embodied using transistors, logic gates, and electrical circuits (for example, application specific integrated circuit (ASIC) circuitry and/or in Digital Signal Processor (DSP) circuitry).

Particularly, the server system 200 and its various components may be enabled using software and/or using transistors, logic gates, and electrical circuits (for example, integrated circuit circuitry such as ASIC circuitry). Various embodiments of the invention may include one or more computer programs stored or otherwise embodied on a computer-readable medium, wherein the computer programs are configured to cause a processor or computer to perform one or more operations. A computer-readable medium storing, embodying, or encoded with a computer program, or similar language, may be embodied as a tangible data storage device storing one or more software programs that are configured to cause a processor or computer to perform one or more operations. Such operations may be, for example, any of the steps or operations described herein. In some embodiments, the computer programs may be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (compact disc read only memory), CD-R (compact disc recordable), CD-R/W (compact disc rewritable), DVD (Digital Versatile Disc), BD (BLU-RAY^{®} Disc), and semiconductor memories (such as mask ROM, PROM (programmable ROM), EPROM (erasable PROM), flash memory, RAM (random access memory), etc.). Additionally, a tangible data storage device may be embodied as one or more volatile memory devices, one or more non-volatile memory devices, and/or a combination of one or more volatile memory devices and non-volatile memory devices. In some embodiments, the computer programs may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Various embodiments of the invention, as discussed above, may be practiced with steps and/or operations in a different order, and/or with hardware elements in configurations that are different than those which, are disclosed. Therefore, although the invention has been described based upon these exemplary embodiments, it is noted that certain modifications, variations, and alternative constructions may be apparent and well within the spirit and scope of the invention.

Although various exemplary embodiments of the invention are described herein in a language specific to structural features and/or methodological acts, the subject matter defined in the appended claims is not necessarily limited to the specific features or acts described above. Rather, the specific features and acts described above are disclosed as exemplary forms of implementing the claims.

## Claims

1. A computer-implemented method comprising:
receiving, by a server system, payment transaction data associated with a first payment instrument of a user, the payment transaction data comprising information of a payment transaction performed at a particular merchant;
generating, by the server system, multivariate payment transaction sequence associated with one or more second payment instruments of the user, the multivariate payment transaction sequence representing past payment transactions accessed from a database, and the past payment transactions performed using the one or more second payment instruments at the particular merchant over a threshold period of time;
predicting, by the server system, a simulated univariate payment transaction sequence associated with the first payment instrument based, at least in part, on a first neural network model and the multivariate payment transaction sequence;
providing, by the server system, the simulated univariate payment transaction sequence and a real univariate payment transaction sequence generated based on the receipt of the payment transaction data associated with the first payment instrument of the user to a second neural network model; and
determining, by the server system, that the payment transaction is fraudulent based, at least in part, on a comparison of the simulated univariate payment transaction sequence and the real univariate payment transaction sequence by the second neural network model.

2. The computer-implemented method as claimed in claim 1, wherein the first neural network model and the second neural network model are incorporated in a generative adversarial network (GAN) model and wherein the first neural network model is a generator neural network model and the second neural network model is a discriminator neural network model.

3. The computer-implemented method as claimed in claim 1, further comprising:
aggregating, by the server system, the payment transaction and previous spendings associated with the first payment instrument performed at the particular merchant over the threshold period of time, to generate the real univariate payment transaction sequence of the first payment instrument.

4. The computer-implemented method as claimed in claim 2, wherein determining that the payment transaction is fraudulent comprises:
identifying, by the discriminator neural network model, a deviation value between the simulated univariate payment transaction sequence and the real univariate payment transaction sequence;and
determining the payment transaction being fraudulent when the deviation value is greater than a predetermined threshold value.

5. The computer-implemented method as claimed in claim 2, further comprising:
aggregating, by the server system, one or more payment transactional features corresponding to the past payment transactions of the one or more second payment instruments to generate the multivariate payment transaction sequence.

6. The computer-implemented method as claimed in claim 5, wherein the one or more payment transactional features comprise an amount of spend, a merchant category code (MCC), merchant risk profile, a frequency of purchase at the particular merchant, and an average amount of purchase at the particular merchant.

7. The computer-implemented method as claimed in claim 2, wherein, in a training phase, the GAN model is trained by:
accessing payment transaction data of a plurality of payment instruments associated with the user, the payment transaction data comprising information of past payment transactions performed at a plurality of merchants using the plurality of payment instruments within a particular time duration;
selecting a first payment instrument from the plurality of payment instruments to learn spending patterns of the first payment instrument at a specific merchant;
generating multivariate payment transaction sequence of one or more second payment instruments from the plurality of payment instruments by aggregating payment transactional features of the past payment transactions associated with the one or more second payment instruments on timely basis;
transmitting the multivariate payment transaction sequence and a merchant flag vector to the generator neural network model for generating a simulated univariate payment transaction sequence associated with the first payment instrument; and
transmitting the simulated univariate payment transaction sequence and a real univariate payment transaction sequence associated with the first payment instrument to the discriminator neural network model.

8. The computer-implemented method as claimed in claim 7, wherein the GAN model is further trained by:
determining, by the discriminator neural network model, a deviation value between the simulated univariate transaction sequence and the real payment transaction sequence associated the first payment instrument; and
updating neural network weights of the generator neural network model based, at least in part, on the deviation value.

9. The computer-implemented method as claimed in claim 7, wherein the merchant flag vector is utilized for conditioning input of the generator neural network model based on the specific merchant.

10. A server system configured to perform the computer-implemented method as claimed in any of the claims 1-9.
